Europäisches Patentamt

European Patent Office

Office européen des brevets

(19)

(11) Numéro de publication : **0 540 424 A1**

(12) # DEMANDE DE BREVET EUROPEEN

(21) Numéro de dépôt : **92402943.2**

(22) Date de dépôt : **29.10.92**

(51) Int. Cl.⁵ : **F16D 3/84**

(30) Priorité : **30.10.91 FR 9113392**

(43) Date de publication de la demande :
**05.05.93 Bulletin 93/18**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Orain, Michel**
**10 rue des Côtes de Vannes**
**F-78700 Conflans ste Honorine (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Dispositif de protection et de retenue de lubrifiant pour joint de transmission articulé, et joint homocinétique ainsi équipé.**

(57) Le joint comprend un barillet (7) solidaire d'un arbre (8) et entraîné en rotation par des galets (6) portés par des tourillons (5) solidaires de l'autre arbre (2).

Un boîtier rigide (9) formant enveloppe autour du joint (1), comporte à chacune de ses extrémités des parois de fermeture (11, 12) munies de moyens d'articulation étanche (15-16, 20-21) par rapport aux arbres (2, 8) quelle que soit leur position angulaire relative.

Utilisation pour les joints à grande vitesse, grande dimension ou forte angularité usuelle de travail.

FIG_1

EP 0 540 424 A1

La présente invention concerne un dispositif de protection et de retenue de lubrifiant pour joint de transmission articulé, notamment joint homocinétique, destiné à assurer l'accouplement entre deux organes tournants, susceptibles de travailler sous angle.

La présente invention concerne également un joint homocinétique équipé d'un tel dispositif.

Il est connu par exemple dans le domaine de l'automobile d'assurer la retenue du lubrifiant et la protection indispensable au fonctionnement du mécanisme des joints homocinétiques équipant les arbres de transmission, par l'intermédiaire de soufflets élastiques reliant un bord ouvert d'un élément extérieur du joint, généralement en forme de fût, et le pourtour d'un arbre relié à un élément intérieur du joint, tel qu'un tripode ou croisillon.

Ces soufflets doivent remplir deux impératifs techniques difficilement conciliables:

- d'une part fermer d'une manière fiable et parfaite l'espace compris entre le fût extérieur du joint et l'arbre intérieur de manière à constituer une enceinte close hermétiquement, contenant le mécanisme et le lubrifiant;
- d'autre part être assez déformables pour assurer la pérennité de cette fermeture souple alors que l'arbre se débat angulairement et le cas échéant (dans le cas de joints coulissants) axialement relativement au fût, et que le soufflet est déformé cycliquement à une fréquence égale à la vitesse de rotation du joint lorsque le joint travaille sous angle;
- et en même temps, être assez rigides pour que la constante de rappel élastique en position neutre des plis soit suffisamment élevée pour leur assurer, en dépit de l'inertie du lubrifiant, une fréquence propre supérieure à la vitesse de rotation, pour que le soufflet tende à revenir de lui-même à sa position neutre, à une vitesse au moins égale à celle correspondant à la vitesse maximale de rotation et malgré le lubrifiant qui le charge intérieurement.

De nombreux travaux ont été effectués pour mettre au point des élastomères pour ces soufflets ainsi que des profils performants et des fixations adaptés aux applications de l'automobile (voir FR-A-1 342 249, 1 347 808, 1 347 809, 1 399 682, 1 482 069).

Les parties actives de ces soufflets ou plis présentent un diamètre que l'on s'efforce de maintenir en dessous de 100 mm pour des raisons de fiabilité, de stabilité et d'endurance. Ces soufflets donnent globalement satisfaction pour les cas d'utilisation les plus courants.

Il n'en demeure pas moins que la fiabilité et la longévité des soufflets conditionnent l'endurance des mécanismes homocinétiques qui ne survivent pas à la perte le lubrifiant consécutive à la détérioration de ces soufflets.

On peut considérer en effet, qu'environ 90% des mises hors service des joints homocinétiques sont initiées par la crevaison du soufflet et la perte du lubrifiant. Cette faiblesse est aggravée lorsque les joints articulés doivent tourner à haute vitesse disons entre 2 000 et 10 000 tours/minute ou/et présenter un diamètre excédant 100 mm, disons pour des vitesses périphériques situées entre 15ü et 50 mètres par seconde.

En effet:

- en un même laps de temps le nombre d'alternances de la contrainte de flexion dans l'élastomère croît comme la vitesse de rotation, et la fatigue du matériau croît de même;
- les forces inertielles croissant comme le carré des vitesses, augmentent considérablement les contraintes;
- la pression centrifuge dans le lubrifiant croît comme le carré de la vitesse de rotation et comme le carré de la hauteur dynamique du lubrifiant et requiert une très grande résistance à l'éclatement des parois élastiques des soufflets;
- les mouvements axiaux de l'arbre des joints coulissants, compression et extension, sont accompagnés de surpression ou de dépression s'exerçant dans l'enceinte du mécanisme. Or ces modifications de la pression relative altèrent le profil des plis de manière erratique et deviennent inacceptables pour les joints de grand diamètre;
- la durée de vie exigée peut dans certains cas (transports ferroviaires et maritimes) être bien supérieure à celle permise par les soufflets élastiques;
- enfin les applications aux véhicules toutterrain, de travaux publics, ou travaillant dans des conditions de températures extrêmes, multiplient les probabilités d'agressions mécaniques et les risques de déchirures et de perforations des soufflets conventionnels.

La paroi élastique du soufflet, de par sa masse et celle du lubrifiant retenu, et les forces centrifuges qui en résultent, présente une tendance à l'instabilité radiale similaire à celle d'une arbre de transmission au voisinage de sa vitesse critique. Cette tendance ne peut être combattue qu'en accroissant l'épaisseur de cette paroi et la rigidité du matériau utilisé. Mais on la rendrait alors inapte à clore l'espace libre et variable entre l'arbre et le fût pendant la rotation du joint sous angle.

Par exemple pour un rayon de 125 mm et une vitesse de rotation de 2 500 tours/minute la pression exercée par le lubrifiant sur la paroi du soufflet s'élèverait à 5 kg/cm$^2$ environ, ce qui représente sensiblement la pression de gonflage de pneumatiques haute pression.

On en arriverait à une structure armée ayant une rigidité et une inertie incompatibles avec la mobilité nécessaire à la fonction de fermeture du joint, en particulier avec les déformations cycliques lors du fonctionnement sous angle.

Depuis le début du développement industriel de l'automobile, les transmissions longitudinales des véhicules à propulsion par les roues arrière ont représenté l'essentiel des lignes d'arbres à haute vitesse, avec des vitesses de rotation sensiblement quadruples de celles des transmissions latérales des véhicules à traction avant. Le seul joint disponible sur le marché et utilisé massivement est le cardan, joint non homocinétique et non coulissant dont l'angularité continue est limitée à 3° ou 6° selon la vitesse de rotation et le degré de confort requis, le défaut d'homocinétie croissant comme le carré de l'angle de travail. Par contre, les quatre tourillonnements sur aiguilles des bras de croisillons sont protégés par des garnitures tournantes, peu sensibles à la force centrifuge, fiables, faciles à installer et qui présentent une endurance très satisfaisante.

Pour des applications spéciales on a aussi utilisé des joints homocinétiques à billes et à tripodes sur des arbres à haute vitesse. Cependant il a fallu respecter des restrictions d'angularité encore plus sévères que le cardan bien que pour des raisons techniques différentes. En effet, les joints à billes sont sujets à un échauffement et une usure croissant rapidement avec l'angularité et de leur côté les joints à tripodes présentent un mouvement relatif d'orbitage inacceptable. Pour ces joints homocinétiques à grande vitesse, mais travaillant sous des angles continus limités à 2 ou 4°, les soufflets élastiques de retenue de lubrifiant classiques sont en général considérés comme suffisamment fiables.

Or, l'introduction du joint homocinétique centré et à haut rendement décrit par le FR-A-2 566 858 et la demande française non publiée 91 08 048 permet l'installation de lignes de transmission à haute vitesse présentant des brisures continues de 10° à 15°. En effet, ce joint réunit les trois caractéristiques indispensables à la transmission de puissance à haute vitesse avec des angularités continues pratiquement triples de celles autorisées jusqu'alors car il est parfaitement homocinétique, parfaitement centré et peu sujet à l'échauffement et à l'usure. Ces qualités assurent donc le confort du véhicule et la longévité de la ligne d'arbre. Mais, la possibilité d'utiliser ce nouveau joint dépend de la disponibilité d'un dispositif de protection et de retenue de lubrifiant d'égales performances et endurance, c'est-à-dire, pouvant tourner à haute vitesse sous angle moyen continu de 10 à 15° et ayant une grande longévité dans des conditions extrêmes de températures et d'environnement.

Le but de la présente invention est de concevoir un dispositif de protection et de retenue de lubrifiant convenant pour les joints homocinétiques, coulissants ou non, qui fonctionnent dans des conditions extrêmes, de par leur taille, leur angle de travail et/ou leur vitesse de rotation, ce dispositif devant présenter le cas échéant une fiabilité et une longévité à l'échelle du service attendu dans l'industrie des transports maritimes et ferroviaires.

Selon un premier aspect de l'invention, le dispositif de protection et de retenue de lubrifiant pour joint de transmission articulé notamment joint homocinétique, disposé entre deux arbres tournants, est caractérisé en ce qu'il comprend un boîtier comprenant une paroi périphérique rigide formant enveloppe autour dudit joint et, aux extrémités de la paroi périphérique, deux dispositifs de fermeture, qui sont solidaires de la paroi périphérique et traversés chacun par l'un des arbres, chaque dispositif de fermeture étant muni de moyens assurant une articulation étanche entre l'arbre qui le traverse et la paroi périphérique quelle que soit la position angulaire relative des arbres, et en ce qu'il est en outre prévu des moyens de coulissement axial entre l'un des dispositifs de fermeture par rapport à l'arbre qui le traverse.

Ainsi, l'angle formé par le boîtier avec chaque arbre est, en ordre de grandeur, sensiblement égal à la moitié de l'angle de travail du joint (au contraire, avec un soufflet classique, l'angle entre le bord ouvert du fût et la région médiane du soufflet est supérieur à l'angle de travail du joint). Par conséquent, les angles sous lesquels travaillent les articulations d'extrémité sont faibles et ceci ouvre la voie à de nombreuses solutions avantageuses dont certaines typiques sont décrites plus loin. De plus, l'invention permet (mais ne l'impose pas) de reporter tout le travail d'articulation au voisinage de la surface des arbres, donc à faibles distance des axes de rotation, donc dans une région où les déplacements relatifs alternatifs dus à l'angle de travail du joint de transmission et/ou les charges dues à la force centrifuge sont très faibles.

En décalant les centres d'articulation du boîtier vers l'intérieur du boîtier on réduit l'encombrement radial du boîtier car on réduit l'excentration du joint à l'intérieur du boîtier lorsque l'angle de travail du joint est maximal.

Selon un second aspect de l'invention, le joint de transmission articulé est caractérisé en ce qu'il est équipé d'un dispositif de protection selon le premier aspect.

L'invention sera mieux comprise et d'autres caractéristiques de celle-ci seront mises en évidence à l'aide de la description qui suit, en référence aux dessins annexés, illustrant au moyen d'exemples non limitatifs, comment l'invention peut être réalisée, et dans lesquels:

- la figure 1 est une vue en coupe longitudinale d'un joint homocinétique coulissant selon un exemple de réalisation de l'invention, représenté en position de travail sous angle;
- la figure 2 est une vue en bout, avec demi-coupe transversale d'un joint selon la figure 1;

- la figure 3 est une vue analogue à la figure 1, mais relative à une variante de réalisation ;
- la figure 4 est une vue d'un détail de la figure 3 ;
- la figure 5 est une vue d'une variante des figures 3 et 4, lorsque le joint est en ligne en haut de la figure et lorsque le joint est sous angle en bas de la figure ;
- les figures 6 et 7 représentent une autre variante, lorsque le joint est en ligne et respectivement sous angle ; et
- les figures 8 à 9 représentent deux autres variantes de réalisation des moyens d'articulation du boîtier de protection du joint homocinétique selon l'invention.

Dans les exemples représentés sur les figures, le joint de transmission homocinétique 1 désigné dans son ensemble, est un joint coulissant à trois galets, connu en soi, et qui ne sera donc pas redécrit en détail ci-après.

Pour l'essentiel, le joint est relié de manière coulissante et articulée à deux arbres 2 et 8. L'arbre 2 est fixé par exemple par des cannelures 3, à l'intérieur d'un tripode 4 constituant un élément intérieur du joint. Le tripode 4 comporte trois tourillons cylindriques 5 dont chacun supporte un galet sphérique 6 par l'intermédiaire d'aiguilles 6a. Ces galets 6 roulent à l'intérieur de couloirs 7a qui sont formés dans l'élément extérieur 7 du joint, appelé "fût" ou "barillet", solidaire de l'arbre 8.

Selon l'invention, le joint de transmission homocinétique 1 comporte un dispositif de protection et de retenue du lubrifiant comprenant un boîtier 9 constitué par une paroi périphérique de forme générale cylindrique 10, formant une enveloppe rigide autour du joint 1. La paroi 10 est reliée à chacune de ses extrémités à une paroi de fermeture rigide 11 ou 12. Chaque paroi de fermeture appartient à un dispositif de fermeture comprenant en outre des moyens d'articulation étanche avec l'arbre 2 ou 8 qui le traverse.

La paroi de fermeture 12 entourant l'arbre moteur 8 est constituée par un prolongement radial de l'enveloppe 10 formant ainsi une sorte de cloche. La paroi de fermeture 11 entourant l'arbre de transmission 2 est constituée par un couvercle rapporté fermant ladite cloche. Un joint d'étanchéité 13 est interposé entre l'enveloppe 10 du boîtier et son couvercle 11 maintenu par un jonc d'arrêt 14. Le joint 13 soumis à une pression dynamique maximum de la part du lubrifiant lors de la rotation du joint est de type statique pour haute pression et assure une fermeture parfaite et démontable du couvercle 11. Donc l'étanchéité est fiable et il n'y a pas de risque de fuite ou de détérioration par fatigue de ce joint d'étanchéité.

Le boîtier rigide 9 et ses parois de fermeture 11, 12 peuvent avantageusement être réalisés par moulage de matière plastique ou de métal léger ou encore par emboutissage de tôle d'acier ou d'alliage léger.

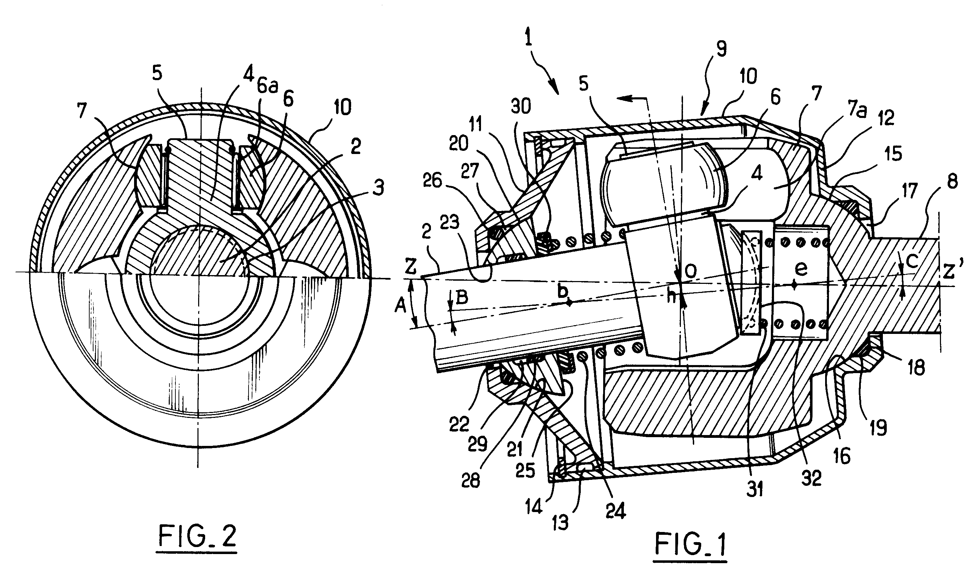

Dans l'exemple des figures 1 et 2, les moyens d'articulation étanche réalisent une articulation étanche entre la paroi de fermeture 11 ou 12 et l'arbre 2 ou 8 qu'elle entoure. Du côté de l'arbre 8, l'articulation est du type rotule. Elle comprend une convexe 15 obtenue de matière par usinage de l'extrémité de l'arbre 8 adjacente au barillet 7 et d'autre part par une portée sphérique 16 correspondante formant siège ménagée sur le côté intérieur de la paroi de fermeture 12, autour d'un orifice central 17 de la paroi 12, traversé par l'arbre 8 avec un certain jeu radial qui permet le débattement angulaire de l'arbre 8. L'articulation 15, 16 ainsi formée est rendue étanche par l'intermédiaire d'un joint torique 18 en élastomère logé dans une gorge annulaire 19 du siège 16, pour ne travailler qu'en oscillation.

Les moyens d'articulation de la paroi de fermeture 11 du boîtier 9 par rapport à l'arbre 2 sont différents des précédents en ce sens qu'ils doivent non seulement permettre tous débattements angulaires dudit arbre 2 en fonction de l'angle de travail du joint 1, comme précédemment, mais également autoriser son débattement axial, correspondant à l'extension et à la compression du joint.

Ces moyens comprennent également une rotule convexe 20 coopérant avec une portée sphérique 21 correspondante forment siège, ménagée sur le coté intérieur de la paroi de fermeture 11, au voisinage d'un orifice central 22 de cette dernière. Là encore, l'orifice central 22 est traversé avec un jeu radial par l'arbre 2 pour permettre son débattement qui, dans ce cas, est non seulement angulaire mais également axial.

Dans cette articulation 20, 21, la rotule convexe 20 est montée coaxialement coulissante sur une région cylindrique lisse de l'arbre 2. Elle comporte pour cela un alésage axial 23 traversé de manière coulissante par l'arbre 2.

Les articulations 15, 16 et 20, 21 sont d'un type déboîtable par simple déplacement de la rotule convexe 15 ou 20 vers l'intérieur du joint. Pour éviter en service un tel déboîtement, il est prévu dans le boîtier 9 autour de l'arbre 2 un ressort de compression 24 interposé entre le tripode 4 et une face interne 25 de la rotule 20. Ce ressort 24 pousse la rotule 20 contre son siège 21, et cet appui sollicite à son tour le boîtier dans le sens appliquant le siège 16 contre la rotule 15 à l'autre extrémité du joint. Pour éviter ou minimiser l'inconvénient qu'aurait le ressort 24 de solliciter en permanence le joint dans le sens de la compression, il est prévu un autre ressort 31 interposé entre le fond du barillet 7 et une coupelle 32 qui rotule sur l'extrémité de l'arbre 2. Ainsi, la poussée du ressort 24 sur le tripode est en partie reportée par le tripode sur le fond du barillet où s'exerce également, en sens contraire, la poussée du même ressort 24 par l'intermédiaire du siège 16. Les ressorts 24 et 31 ont en même temps une fonction de ressort amortisseur de fin de course, en extension et respectivement en compression du joint.

Un joint torique 26 en élastomère, semblable au joint 18, est monté dans une gorge annulaire 27 réalisée dans ce dernier pour s'appuyer de façon étanche sur la face sphérique de la rotule 20. Le joint 26 ne travaille ainsi qu'en oscillation.

L'étanchéité concerne également le coulissement axial de l'alésage 23 sur une région lisse de l'arbre 2. Pour cela un joint d'étanchéité torique 28 est interposé entre un chambrage annulaire 29 réalisé dans l'alésage 23 de la rotule 20 et la région lisse de l'arbre 2. Le joint 28 ne travaille ainsi qu'en coulissement axial.

L'étanchéité au coulissement axial est complétée par une garniture plane 30 interposée axialement entre l'organe de poussée élastique 24 et la face intérieure plane 25 de la rotule convexe 20. La poussée du ressort 24 applique la garniture 30 radialement contre l'arbre 2 et axialement contre la face 25. On peut, en variante, ne prévoir que l'une ou l'autre des étanchéités 28 et 30.

Comme le montre la figure 1, les centres d'articulation e et b des moyens d'articulation 15-16 et 20-21 qui viennent d'être décrits sont situés chacun sur l'axe de l'arbre 8 ou 2 correspondant. De plus, comme on l'a vu plus haut, les moyens d'articulation 15-16 et 20-21 sont déboîtables par déplacement axial des rotules convexes 15 et 20 vers l'intérieur du joint. Pour cela, les centres e et b sont déportés vers l'intérieur du joint 1, chacun par rapport au plan radial dans lequel se trouve le siège sphérique 16 ou 21 correspondant.

Il en résulte une réduction du déport radial h de l'axe $\overline{be}$ du boîtier 9 relativement au centre d'articulation O du joint homocinétique 1, qui se traduit par une réduction avantageuse de l'encombrement extérieur que doit avoir le boîtier 9 pour ne pas interférer avec le fût 7 lorsque l'angle de travail A du joint est maximal.

En fonctionnement, pour un angle de travail A entre les arbres 2 et 8, les angles d'articulation B et C des articulations 20-21 et 15-16 sont approximativement deux fois plus petits que A, car B et C sont approximativement égaux et on a en outre la relation A = B + C. L'angle de travail maximal des articulations est donc de quelques degrés seulement.

Par ailleurs, la pression exercée par le lubrifiant sur les garnitures ou joints 26, 28, 30 est très faible, car cette pression due à la force centrifuge est une fonction croissante de deux paramètres qui n'ont qu'une faible valeur dans le cas des joints 26, 28, 30, à savoir le carré du rayon de la surface contre laquelle elle s'exerce, et le niveau dynamique du lubrifiant depuis ladite surface en direction de l'axe de rotation.

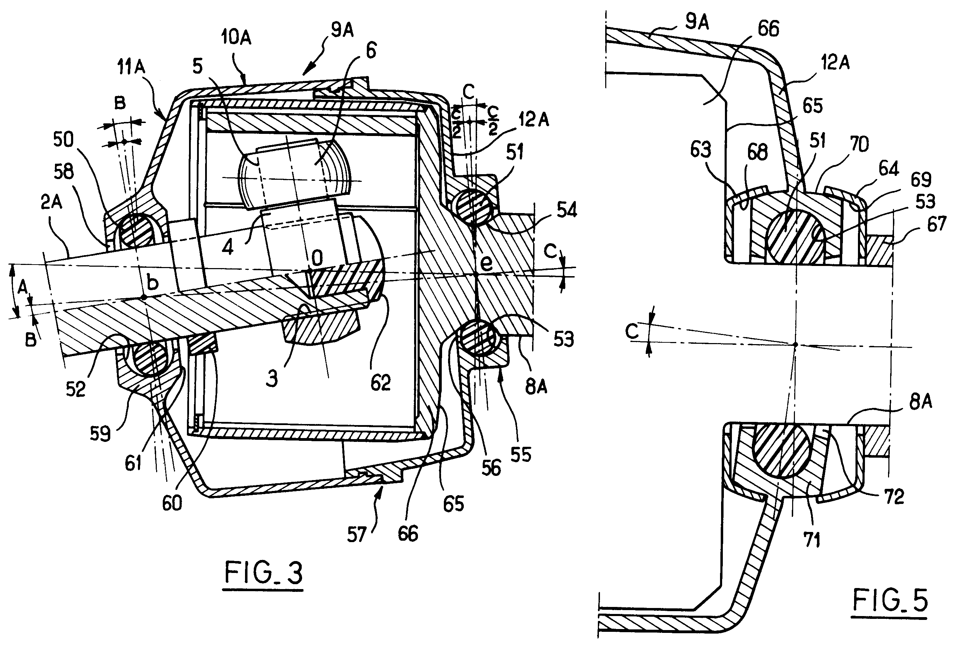

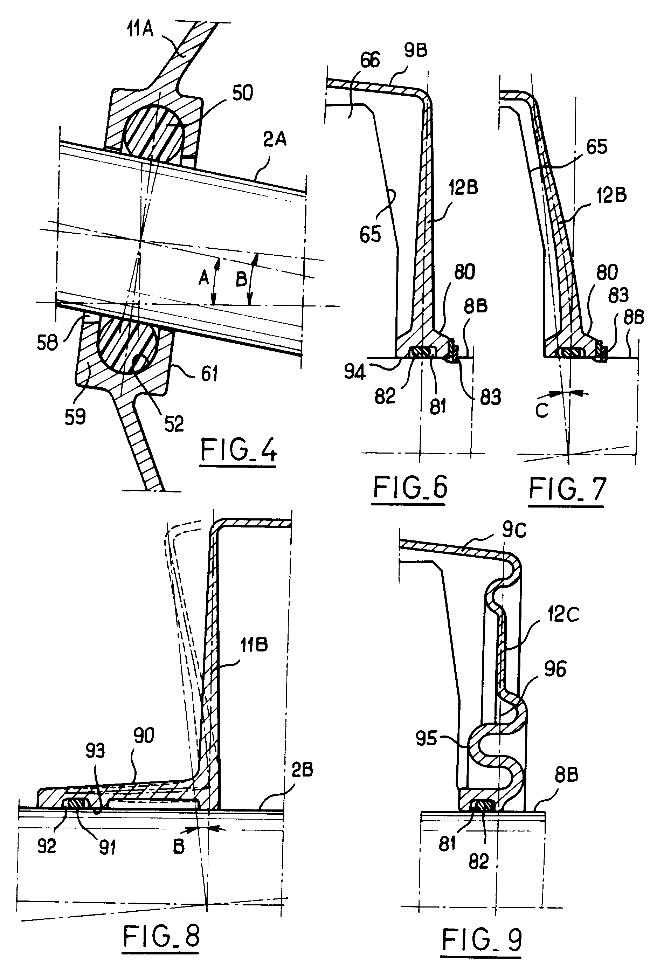

Le mode de réalisation représenté aux figures 3 et 4 diffère essentiellement du précédent en ce que les moyens d'articulation et d'étanchéité comprennent un joint torique 50, 51 en élastomère monté dans une gorge annulaire 52, 53 tournée vers l'arbre 2A ou 8A, ménagée dans l'extrémité radialement intérieure renflée 59, 55 de la paroi de fermeture 11A ou 12A du boîtier 9A. Le joint est logé entre la gorge 52 ou 53 et l'arbre correspondant 2A ou 8A, de manière à assurer une liaison mobile étanche entre la paroi 11A ou 12A et l'arbre 2A ou 8A.

Plus précisément, le joint torique 51 situé du côté de l'arbre 8A lié au barillet 7 est logé entre la gorge annulaire 53 de la paroi de fermeture 12A et une gorge complémentaire 54 réalisée sur la périphérie de l'arbre 8A. Ainsi, le joint 51 assure un verrouillage axial du boîtier 9A par rapport à l'arbre 8A et ne travaille donc qu'en oscillation en fonction du débattement angulaire C.

Les extrémités renflées 55, 59, formant palier d'oscillation du boîtier 9A par rapport aux arbres 8A et 2A respectivement, comportent un trou de passage 56, 58 de plus grand diamètre que l'arbre 8A et respectivement 2A, de manière à autoriser le débattement angulaire de l'arbre 8A ou 2A dans le boîtier autour d'un centre e ou b qui, cette fois-ci, est sensiblement dans le plan du joint torique respectif 51, 50. Pour réduire les frottements dus aux joints 50, 51, les gorges 52, 53 et 54 sont évasées de part et d'autre du joint qu'elles retiennent.

La paroi périphérique 10A est réalisée en deux parties rigides reliées par encliquetage, emboîtement et/ou collage étanche 57 et chaque partie est réalisée d'une seule pièce avec une paroi 11A et respectivement 12A.

Le joint torique 50 a en outre une fonction de coulissement axial sur l'arbre 2A.

ePour cela, le joint torique 50 s'appuie sur une région cylindrique lisse de l'arbre 2A sur laquelle le joint 50, en légère compression entre ledit arbre et la gorge 52 de la paroi de fermeture 11A, peut coulisser axialement de manière libre sur l'arbre 2A.

Une bague élastique 60, fixée coaxialement sur l'arbre 2A, limite la course d'extension du joint en butant contre une face interne 61 de la paroi de fermeture 11A.

La limitation silencieuse de coulissement en compression est assurée par un tampon élastique 62 placé en bout de l'arbre 2A.

Les angles B et C de travail des articulations étanches valent environ la moitié de l'angle de brisure A du joint homocinétique. Les joints toriques 50, 51 prennent une inclination qui est intermédiaire entre celle du boîtier 9A et celle de l'arbre 2A ou 8A concerné. Les angles d'inclinaison des joints toriques 50, 51 relativement à leurs logements, sont ainsi égaux à B/2 et C/2. Ils sont donc environ quatre fois moins grands que l'angle A de brisure du joint, ce qui assure leur longévité et leur fiabilité.

Comme dans la version des figures 1 et 2, les joints toriques 50, 51 ne supportent pas de rotation différentielle entre leur portées intérieure et extérieure, puisque le boîtier tourne à la même vitesse que le joint. Ils ne supportent pas non plus la pression centrifuge, car lors de la rotation des arbres 2A, 8A, le lubrifiant se regroupe à la périphérie intérieure du boîtier, radialement au-delà des joints.

Selon l'invention, les angles d'oscillation B/2 et C/2 égaux à A/4 n'entraînent qu'une rotation élastique des joints 50, 51 pour les valeurs courantes de l'angle de travail A et un très petit glissement pour les valeurs exceptionnelles de cet angle.

Il en résulte une fiabilité totale et une longévité illimitée.

Enfin, la résistance aux agressions physiques ou chimiques extérieures, et aux percussions de graviers est assurée pour un coût de production réduit.

La figure 5 représente à plus grande échelle un montage différent des joints toriques 50, 51 d'articulation et d'étanchéité précédemment décrits.

Dans cet exemple, la fixité axiale sur l'arbre 8A, de l'articulation formée par le joint torique 51, interposé entre la gorge annulaire 53 de la paroi de fermeture 12A et l'arbre 8A, est assurée par l'intermédiaire de deux bagues de rotulage 63, 64, formant cage et qui sont interposées entre le fond 65 du barillet 66 et un roulement 67 (représenté de manière partielle) rapporté sur ledit arbre. Lesdites bagues sont situées de part et d'autre de la paroi de fermeture 12A. Elles comportent chacune une portée sphérique interne 68 ou 69 formant siège dans laquelle oscille, à la manière d'une rotule, une portée externe correspondante 70 de la surépaisseur 71 de la paroi de fermeture 12A.

Cette solution offre l'avantage de pouvoir utiliser un arbre 8A qui est cylindrique lisse, même dans la région d'appui du joint 51. La réalisation de l'arbre 8A est donc plus facile et moins onéreuse. La paroi de fermeture 12A a un orifice central 72 ayant un diamètre plus grand que celui de l'arbre 8A pour permettre le débattement angulaire de ce dernier.

Dans les modes de réalisation représentés sur les figures 6 à 9, les moyens d'articulation étanche des parois de fermeture 11B ou 12B, 12C du boîtier 9B, 9C sur les arbres 2B, et 8B sont constitués par des zones flexibles des parois de fermeture 11B ou 12B, 12C, à proximité desdits arbres, qu'elle entourent de manière étanche.

Ces zones flexibles sont obtenues par moulage à partir d'un matériau plastique, élastiquement déformable et constituant la paroi de fermeture même du boîtier, de manière à autoriser les prises d'angle B (figure 8) ou C (figure 7) en fonction de l'angle de débattement des arbres respectifs.

Les figures 6 et 7 représentent respectivement, en position non déformée et déformée selon l'angle C, la paroi de fermeture 12B pour laquelle seule une oscillation par rapport à l'arbre moteur 8B est requise. Dans ce cas, la paroi 12B présente autour de l'arbre 8B, un épanouissement terminal 80 comportant dans l'alésage 94 entourant l'arbre 8A un chambrage 81 recevant une garniture d'étanchéité 82 qui est quasi statique.

Un jonc d'arrêt 83 assure la retenue axiale du boîtier 9B contre le fond 65 du barillet 66.

Comme le montre la figure 8, la paroi de fermeture 11B entourant l'arbre 2B susceptible de débattement axial est solidaire d'un fourreau 90 dirigé vers l'extérieur du joint et entourant de manière coulissante ledit arbre 2B. Comme représenté en pointillés, le fourreau 90 contribue à la flexibilité de mise sous angle B en se bombant légèrement en direction radiale. Un joint d'étanchéité 91 est interposé entre le fourreau coulissant 90 et l'arbre 2B. Il est reçu dans un chambrage annulaire 92 réalisé dans l'alésage interne 93 du fourreau 90.

Comme le montre la figure 9, la flexibilité d'une paroi de fermeture 12C par exemple, d'un boîtier 9C, peut être accrue par des plis concentriques 95 accroissant la longueur radiale développée de la paroi de fermeture 12C. Les plis s'étendent de part et d'autre d'une ligne moyenne 96 perpendiculaire à l'axe de l'arbre 8B.

L'invention n'est pas limitée aux exemples décrits et représentés.

On peut panacher les solutions présentées, c'est-à-dire réaliser par exemple une première extrémité du boîtier selon la figure 1 et l'autre extrémité selon la figure 3.

L'invention est applicable à tous types de joints articulés, par exemple à des cardans ou encore à un joint comprenant quatre tourillons tels que 5 disposés en croisillon, et quatre couloirs qui sont montés oscillants autour d'axes longitudinaux par rapport au fût en étant couplés entre eux pour que chaque couloir oscille en opposition de phase par rapport à ses deux voisins.

**Revendications**

1. Dispositif de protection et de retenue de l'ubrifiant pour joint de transmission articulé (1) notamment joint homocinétique, disposé entre deux arbres tournants (2, 8, 2A, 8A, 8B), caractérisé en ce qu'il comprend un boîtier (9, 9A, 9B, 9C) comprenant une paroi périphérique rigide (10) formant enveloppe autour dudit joint (1) et aux extrémités de la paroi périphérique, deux dispositifs de fermeture (11, 12, 11A, 12A, 12B, 12C), qui sont solidaires de la paroi périphérique et traverses chacun par l'un des arbres, chaque dispositif de fermeture étant muni de moyens (20-21; 15-16, 50, 51) assurant une articulation étanche entre l'arbre (2, 8, 2A, 2B, 8A) qui le traverse et la paroi périphérique quelle que soit la position angulaire relative des arbres, et en ce qu'il est en outre prévu des moyens de coulissement axial entre l'un des dispositifs de fermeture (11, 11A, 11B) par rapport à l'arbre (2, 2A, 2B) qui le traverse.

2. Dispositif selon la revendication 1, caractérisé en ce que pour chaque dispositif de fermeture, les moyens d'articulation (15-16, 20-21,) ont un centre (e, b) qui est situe sensiblement sur l'axe de l'arbre traversant ce dispositif de fermeture et qui est déporté vers l'intérieur du joint (1) par rapport à une région de contact (16, 21) entre le dispositif de fermeture et l'arbre qui le traverse.

3. Dispositif selon la revendication 1 ou 2, caractérisé en ce que les moyens d'articulation de chaque dispositif de fermeture d'extrémité (11, 12) comprennent une rotule convexe solidaire angulairement de l'arbre traversant le dispositif de fermeture et une portée sphérique (21, 16) complémentaire formant siège pour la rotule convexe et solidaire d'une paroi de fermeture (11, 12) appartenant au dispositif de fermeture.

4. Dispositif selon la revendication 3, caractérisé en ce que l'une des rotules convexes (15) est obtenue de matière sur l'arbre (8) dont elle est angulairement solidaire.

5. Dispositif selon l'une des revendications 3 ou 4, caractérisé en ce que les moyens de coulissement comprennent un montage coulissant de l'une des rotules convexes (20) sur l'arbre (2) dont elle est angulairement solidaire.

6. Dispositif selon la revendication 5, caractérisé en ce que l'un au moins des couples rotule convexe / portée sphérique est de type déboîtable par déplacement de la rotule convexe (15, 20) vers l'intérieur du boîtier à l'encontre d'au moins un organe de poussée élastique axiale (24) disposé à l'intérieur du boîtier (9).

7. Dispositif selon la revendication 5 ou 6, caractérisé en ce que la rotule à montage coulissant comprend un alésage (23) dans lequel coulisse l'un (2) des arbres, et en ce qu'un joint torique d'étanchéité (28) est monté dans un chambrage annulaire (29) réalisé dans ledit alésage (23).

8. Dispositif selon la revendication 6, caractérisé en ce qu'un joint d'étanchéité (30) est interposé axialement entre l'organe de poussée élastique axiale (24) et une face axialement intérieure (25) de la rotule convexe (20) à montage coulissant, pour s'appuyer radialement sur l'arbre (2) et axialement contre la rotule convexe à montage coulissant.

9. Dispositif selon l'une des revendications 4 à 8, caractérisé en ce qu'un joint torique d'étanchéité (18, 26) est interposé entre chaque rotule convexe (15, 20) et le siège (16, 21) correspondant, ledit joint (18, 26) étant logé partiellement dans une gorge annulaire (19, 27) dudit siège (16, 21) pour ne travailler qu'en oscillation.

10. Dispositif selon la revendication 1 ou 2, caractérisé en ce que les moyens d'articulation étanche comprennent pour l'un au moins des dispositifs de fermeture un joint torique (50, 51) disposé dans un logement annulaire défini entre une paroi rigide (11A, 12A) du dispositif de fermeture du boîtier (9A) et l'arbre correspondant (2A, 8A).

11. Dispositif selon la revendication 10, caractérisé en ce que ledit logement est défini par deux gorges (53, 54) se faisant face, appartenant l'une à la paroi rigide (12A) et l'autre à l'arbre (8A) correspondant, de manière que les moyens d'articulation étanche assurent simultanément une retenue axiale du boîtier (9A) par rapport à l'arbre (8A).

12. Dispositif selon la revendication 10, caractérisé en ce que, au titre des moyens de coulissement, le joint torique (50) repose sur une région cylindrique lisse de l'arbre correspondant (2A), pour pouvoir coulisser de manière étanche sur celui-ci.

13. Dispositif selon la revendication 1, caractérisé en ce que pour l'un au moins des dispositifs de fermeture, les moyens d'articulation étanche comprennent un moyen d'étanchéité (51) entre la paroi de fermeture (12A) et l'arbre (8A) et, en outre, de chaque côté de la paroi de fermeture, une bague de rotulage (63, 64) fixée axialement à l'arbre correspondant et comportant une portée sphérique interne (68, 69) dans laquelle oscille une portée sphérique externe complémentaire d'une paroi de fermeture appartenant au dispositif de fermeture.

14. Dispositif selon la revendication 1, caractérisé en ce que les moyens d'articulation de l'un au moins des dispositifs de fermeture (11B, 12B, 12C) comprennent une zone flexible d'une paroi de fermeture appartenant au dispositif de fermeture (11B, 12B, 12C).

15. Dispositif selon la revendication 14, caractérisé en ce que la zone flexible est obtenue par moulage à partir d'un matériau plastique, élastiquement déformable constituant la paroi de fermeture (11B, 12B, 12C).

16. Dispositif selon les revendications 14 ou 15, caractérisé en ce que la zone flexible comporte une succession de plis annulaires (95) accroissant la dimension radiale développée de la paroi de fermeture (12C).

17. Dispositif selon l'une des revendications 14 à 16, caractérisé en ce que l'étanchéité entre un dispositif de fermeture (11B, 12B, 12C) du boîtier (9B, 9C) et l'arbre correspondant (2B, 8B), s'effectue par l'intermédiaire d'un joint d'étanchéité (91, 82) interposé entre ledit arbre (2B, 8B) et un chambrage annulaire (92, 81) d'un orifice central (93, 94) de la paroi de fermeture (11B, 12B, 12C).

18. Dispositif selon l'une des revendications 14 à 17, caractérisé en ce que la zone flexible est disposée entre la paroi périphérique et un fourreau (90) qui appartient au dispositif de fermeture et coulisse sur l'arbre (2B), un joint d'étanchéité (91) étant interposé entre le fourreau coulissant (90) et l'arbre (2B).

19. Dispositif selon l'une des revendications 1 à 18, caractérisé en ce que l'arbre (2A, 2B) qui traverse le dispositif de fermeture associé à des moyens de coulissement axial porte, à l'intérieur du boîtier, une butée (60) destinée à coopérer avec ce dispositif de fermeture pour limiter l'extension du joint.

20. Joint de transmission articulée, caractérisé en ce qu'il est équipé d'un dispositif de protection selon l'une des revendications 1 à 19.

FIG_1

FIG_2

EP 0 540 424 A1

FIG. 5

FIG. 3

10

FIG_4

FIG_6

FIG_7

FIG_8

FIG_9

Office européen
des brevets

**RAPPORT DE RECHERCHE EUROPEENNE**

Numero de la demande

EP 92 40 2943

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 103 210  (F.S.A.S.)<br>--- | | F 16 D  3/84 |
| D,A | FR-A-2 566 858  (UNI-CARDAN)<br>--- | | |
| A | GB-A- 715 298  (A. BELLOMO)<br>----- | | |

**DOMAINES TECHNIQUES RECHERCHES (Int. Cl.5)**

F 16 D

Le présent rapport a été établi pour toutes les revendications

| Lieu de la recherche | Date d'achèvement de la recherche | Examinateur |
|---|---|---|
| LA HAYE | 26-01-1993 | BEGUIN-ADRIAENSSENS C P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)